# FASCICULE DE BREVET EUROPEEN

(11) **EP 2 498 654 B1**
(45) Date de publication et mention de la délivrance du brevet: **16.04.2014**
(21) Numéro de dépôt: 09764548.5
(22) Date de dépôt: 12.11.2009
(51) Int. Cl.: A47J 43/10

(54) **FOUET POUR APPAREIL DE PRÉPARATION CULINAIRE ET APPAREIL MUNI D'UN TEL FOUET**
RÜHRWERKZEUG FÜR EIN LEBENSMITTELZUBEREITUNGSGERÄT UND VORRICHTUNG MIT EINEM DERARTIGEN RÜHRWERKZEUG
BEATER FOR A FOOD PREPARATION APPLIANCE AND DEVICE PROVIDED WITH SUCH A BEATER

(43) Date de publication de la demande: 19.09.2012
(73) Titulaire: SEB S.A., 69130 Ecully (FR)
(72) Inventeur: VENEZIANO, José, Carlos, CEP-13280-000 Vinhedo, SP (BR); MERLO, Angelo, Wagner, CEP-04619-000 Campo BeIo, SP (BR)
(74) Mandataire: Bourrières, Patrice
(86) Numéro de dépôt international: PCT/FR2009/001302
(87) Numéro de publication internationale: WO 2011/058234

(56) Documents cités:
- EP-A2- 0 216 234
- WO-A1-2008/018257
- DE-A1- 3 225 450
- US-A- 3 319 939

## Description

La présente invention concerne un fouet pour appareil de préparation culinaire, tel un batteur, dont la construction permet un rendement optimal dans la préparation des aliments.

Généralement, les fouets de l'art antérieur possèdent deux cadres rectangulaires qui forment une cage dont la fonction est de mélanger les aliments à traiter, comme par exemple décrit dans le brevet WO 2008/018257.

Chacun des deux fouets est fixé au moyen d'une tige sur la base du batteur, de sorte que les cadres sont disposés de manière orthogonale les uns par rapport aux autres.

Cet agencement sert à mélanger les aliments. Néanmoins, la présente invention a pour objectif d'améliorer cette fonction.

A cet effet, l'invention se rapporte à un fouet pour appareil de préparation culinaire, comprenant une tige d'entraînement supportant un premier et un deuxième cadre de forme générale rectangulaire s'étendant longitudinalement à la tige, caractérisé en ce que les cadres comportent des bords longitudinaux présentant localement un point d'inflexion au niveau d'une zone de restriction de largeur de sorte que les cadres présentent deux largeurs distinctes de part et d'autre du point d'inflexion.

Selon une autre caractéristique de l'invention, les cadres présentent une forme symétrique par rapport à la tige.

Selon-encore une autre caractéristique de l'invention, les cadres comportent une partie supérieure et une partie inférieure munies de bord longitudinaux sensiblement rectilignes, ou faiblement courbés, inclinés de moins de 20° par rapport à la tige, les parties supérieure et inférieure des cadres présentant des largeurs moyennes distinctes et étant reliées entre elles par la zone de restriction de largeur.

Selon encore une autre caractéristique de l'invention, les cadres comportent, au niveau du point d'inflexion, une inclinaison de plus de 20° par rapport à la direction de la tige.

Selon encore une autre caractéristique de l'invention, la zone de restriction de largeur est disposée sensiblement au tiers de la hauteur du cadre en partant de l'extrémité inférieure du cadre.

Selon encore une autre caractéristique de l'invention, le fouet comporte un premier cadre et un deuxième cadre disposés orthogonalement l'un par rapport à l'autre.

Selon une autre caractéristique de l'invention, le premier cadre comporte une partie inférieure de plus grande largeur que la partie supérieure du premier cadre, le deuxième cadre comportant une partie supérieure présentant une plus grande largeur que la partie inférieure du deuxième cadre.

L'invention concerne également un appareil électroménager de préparation culinaire, caractérisé en ce qu'il comporte deux fouets tels que précédemment décrits, ces fouets étant entraînés en rotation autour de leur tige.

Selon une autre caractéristique de l'invention, l'appareil comporte un moteur pour l'entraînement en rotation des fouets.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels:
- La figure 1 est une vue latérale des fouets objets de la présente invention ;
- La figure 2 est une vue schématique, de dessus, de la trajectoire du flux de brassage engendré par un fouet selon l'art antérieur, c'est à dire muni d'un cadre rectangulaire standard ;
- La figure 3 est une vue schématique de dessus, de la trajectoire du flux de brassage engendré par un fouet objet de la présente invention en fonctionnement ;
- La figure 4 est une vue schématique de la trajectoire du flux de brassage engendré par deux fouets de l'art antérieur travaillant en parallèle ;
- La figure 5 est une vue schématique de la trajectoire du flux de brassage engendré par deux fouets objets de la présente invention en position de fonctionnement ;
- La figure 6 est une vue schématique de la trajectoire des cadres d'un fouet de l'art antérieur en position de fonctionnement ;
- La figure 7 est une vue schématique de la trajectoire des cadres du fouet de la présente invention en position de fonctionnement.

Seuls les éléments nécessaires à la compréhension de l'invention ont été représentés. Pour faciliter la lecture des dessins, les mêmes éléments portent les mêmes références d'une figure à l'autre.

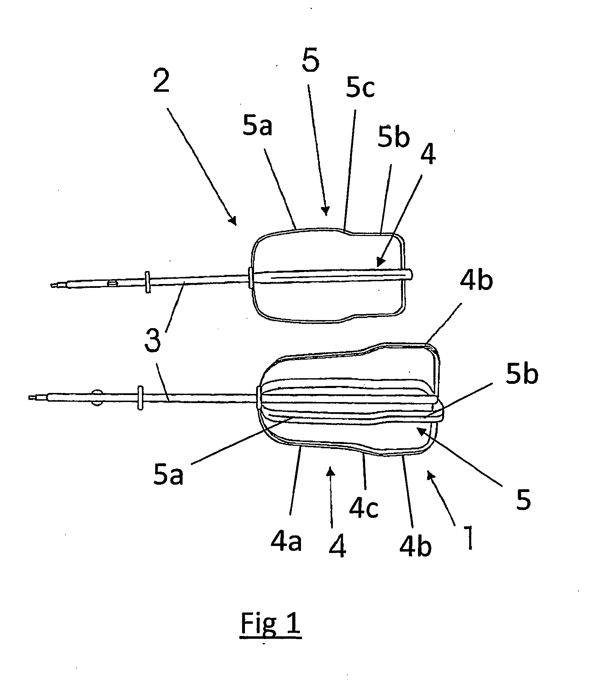

On peut voir sur la figure 1 deux fouets 1, 2 comprenant chacun une tige 3 dont l'extrémité supérieure est munie d'un dispositif d'entraînement permettant son accouplement sur un batteur électrique.

Les fouets 1, 2 possèdent chacun une cage constituée par deux cadres rectangulaires 4, 5 disposés orthogonalement, les cadres 4, 5 présentant localement une restriction de leur largeur de sorte que les cadres 4,5 possèdent deux largeurs distinctes le long de la tige 3.

En particulier, les cadres 4, 5 comportent une partie supérieure 4a,5a et une partie inférieure 4b,5b munies de bord longitudinaux rectilignes faisant un angle de moins de 20° par rapport à la direction longitudinale de la tige 3, ces parties supérieure 4a, 5a et inférieure 4b, 5b du cadre présentant des largeurs distinctes et étant reliées par une zone de restriction de largeur présentant un point d'inflexion 4c, 5c.

La partie inférieure 4b du cadre 4 présente préférentiellement une plus grande largeur que la partie supérieure 4a, la partie inférieure 4b de plus grande largeur représentant approximativement un tiers de la longueur du cadre 4.

A l'inverse, la partie inférieure 5b du cadre 5 présente préférentiellement une plus faible largeur que la partie supérieure 5a, la partie supérieure 5a de plus grande largeur représentant approximativement les deux tiers de la longueur du cadre 5.

Ainsi, comme on peut le voir sur la figure 1, les partie supérieure 5a et inférieure 4b des fouets 1 et 2 coopèrent de manière à ce que la partie inférieure 4b de plus grande largeur se termine quand la partie supérieure 5a de plus grande largeur commence, lorsque les fouets 1, 2 sont disposés parallèlement et à proximité l'un de l'autre.

Lorsque le fouet 1, 2 représenté sur la figure 1 tourne dans une masse d'aliments à traiter, les cadres 4,5 déplacent la masse de sorte que la force centrifuge agissant sur cette masse forme une cavité dans la région définie par la cage constituée par les cadres 4, 5.

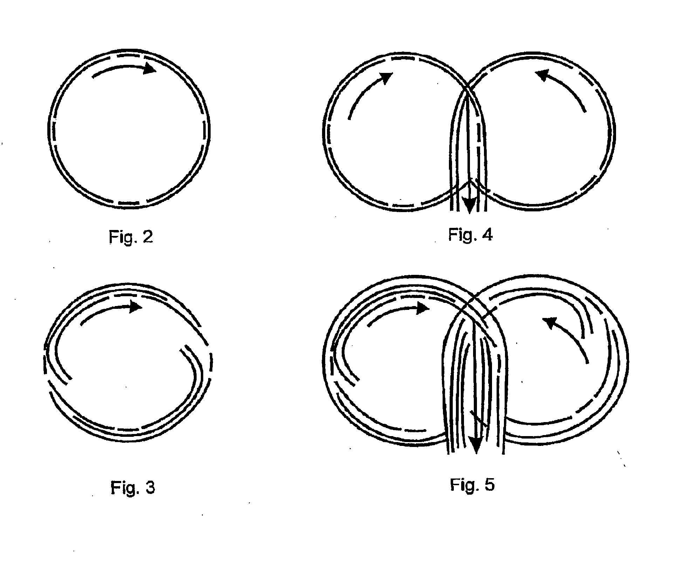

La figure 2 illustre le cas où un fouet de l'art antérieur est utilisé seul, ce fouet présentant deux cadres parfaitement rectangulaires, c'est-à-dire sans restriction de largeur, disposés orthogonalement. Dans ce cas, la cavité générée par la rotation du fouet aura une forme cylindrique, les bords longitudinaux de chaque cadre venant heurter la masse alimentaire à traiter à la même distance radiale de la tige.

Par contre, dans le cas où l'on utilise un seul fouet 1, 2, objet de la présente invention, ainsi que cela est illustré sur la figure 3, il faudra davantage de temps pour qu'un certain point de la masse d'aliment disposé autour de la cavité, touché par un côté de la partie inférieure 4b de plus grande largeur, ou par la partie supérieure 5a de plus grande largeur, soit touché par l'autre côté du même cadre 4,5. De cette façon, la masse « tombera » dans la cavité, faisant tomber une partie suffisante pour qu'elle soit touchée par la partie supérieure 4a ou inférieure 5b du cadre 4, 5 qui a la plus petite largeur.

La turbulence de la masse est ainsi augmentée ce qui entraîne son aération et améliore considérablement l'action du fouet 1, 2.

Si l'on observe la figure 5, les deux fouets 1, 2 fonctionnent ensemble, de sorte que, outre ce qui a été décrit précédemment, on peut observer que le mouvement des fouets 1, 2 force la masse à passer d'un côté à l'autre telle une pompe. Cela provoque également la turbulence de la masse.

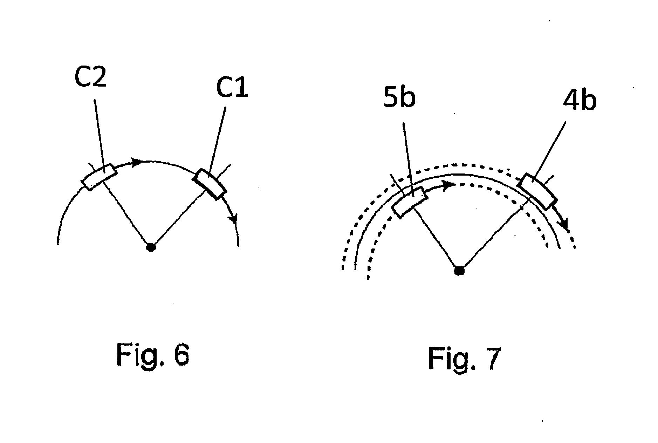

Par ailleurs, on peut également comprendre le principe de fonctionnement des fouets 1, 2 selon l'invention en comparant la figure 6, relative à l'art antérieur, avec la figure 7 relative aux fouets 1, 2 de la présente invention. En effet, on constate sur la figure 7 que les extrémités radiales des deux cadres 4, 5, qui se déplacent suivant des trajectoires différentes, vont heurter plus de particules que les fouets de l'art antérieur dans lesquels les extrémités radiales C1, C2 des deux cadres se déplacent suivant une seule trajectoire.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi dans une variante de réalisation, les bords longitudinaux des cadres pourront présenter une inclinaison plus importante par rapport à la tige.

## Revendications

1. Fouet (1, 2) pour appareil de préparation culinaire, comprenant une tige (3) d'entraînement supportant un premier cadre (4) et un deuxième cadre (5) de forme générale rectangulaire s'étendant longitudinalement à la tige (3) et disposés orthogonalement l'un par rapport à l'autre, les premier et deuxième cadres (4, 5) comportant des bord longitudinaux constitués d'une partie supérieure (4a, 5a) et d'une partie inférieure (4b, 5b) sensiblement rectilignes, ou faiblement courbées, inclinées de moins de 20° par rapport à la tige (3), les cadres (4, 5) présentant localement un point d'inflexion (4c, 5c) au niveau d'une zone de restriction de largeur reliant les parties supérieure (4a, 5a) et inférieure (4b, 5b) de sorte que les parties supérieure (4a, 5a) et inférieure (4b, 5b) du cadre (4, 5) présentent des largeurs moyennes distinctes, **caractérisé en ce que** la partie inférieure (4b) du premier cadre (4) présente une plus grande largeur que la partie supérieure (4a) du premier cadre et **en ce que** la partie supérieure (5a) du deuxième cadre (5) présente une plus grande largeur que la partie inférieure (5b) du deuxième cadre.

2. Fouet (1, 2) pour appareil de préparation culinaire selon la revendication 1, **caractérisé en ce que** ledit cadre (4, 5) présente une forme symétrique par rapport à ladite tige (3).

3. Fouet (1, 2) pour appareil de préparation culinaire selon l'une quelconque des revendications 1 à 2, **caractérisé en ce que** le cadre (4,5) comporte, au niveau du point d'inflexion (4c, 5c), une inclinaison de plus de 20° par rapport à la direction de la tige (3).

4. Fouet (1, 2) pour appareil de préparation culinaire selon l'une quelconque des revendications 1 à 3, **caractérisé en ce que** la partie inférieure (4b) du cadre (4) présente une plus grande largeur que la partie supérieure (4a) du cadre.

5. Fouet (1, 2) pour appareil de préparation culinaire selon l'une quelconque des revendications 1 à 4, **caractérisé en ce que** la zone de restriction de largeur est disposée sensiblement au tiers de la hauteur du cadre (4, 5) en partant de l'extrémité inférieure du cadre (4,5).

6. Appareil électroménager de préparation culinaire, **caractérisé en ce qu'**il comporte deux fouets (1, 2) selon l'une des revendications 1 à 5, lesdits fouets (1, 2) étant entraînés en rotation autour de leur tige (3).

7. Appareil électroménager de préparation culinaire selon la revendication 6, **caractérisé en ce que** ledit appareil comporte un moteur pour l'entraînement en rotation desdits fouets (1, 2).

## Patentansprüche

1. Rührbesen (1, 2) für ein Gerät zur Zubereitung von Nahrungsmitteln mit einem Antriebsstab (3), der einen ersten Flügel (4) und einen zweiten Flügel (5) mit einer im Allgemeinen rechteckigen Form trägt, die sich in Längsrichtung des Stabes (3) erstrecken und rechtwinklig zueinander angeordnet sind, wobei der erste und der zweite Flügel (4, 5) Längsränder aufweisen, die aus einem oberen Teil (4a, 5a) und einem unteren Teil (4b, 5b) bestehen, die im Wesentlichen geradlinig oder leicht gekrümmt und um weniger als 20° in Bezug auf den Stab (3) geneigt sind, wobei die Flügel (4, 5) lokal einen Wendepunkt (4c, 5c) auf der Höhe eines Bereichs mit Einschränkung der Breite aufweisen, der den oberen Teil (4a, 5a) und den unteren Teil (4b, 5b) verbindet, so dass der obere Teil (4a, 5a) und der untere Teil (4b, 5b) des Flügels (4, 5) unterschiedliche durchschnittliche Breiten aufweisen, **dadurch gekennzeichnet, dass** der untere Teil (4b) des ersten Flügels (4) eine größere Breite als der obere Teil (4a) des ersten Flügels hat und der obere Teil (5a) des zweiten Flügels (5) eine größere Breite als der untere Teil (5b) des zweiten Flügels hat.

2. Rührbesen (1, 2) für ein Gerät zur Zubereitung von Nahrungsmitteln nach Anspruch 1, **dadurch gekennzeichnet, dass** der genannte Flügel (4, 5) eine symmetrische Form in Bezug auf den genannten Stab (3) aufweist.

3. Rührbesen (1, 2) für ein Gerät zur Zubereitung von Nahrungsmitteln nach einem der Ansprüche 1 bis 2, **dadurch gekennzeichnet, dass** der Flügel (4, 5) auf der Höhe des Wendepunktes (4c, 5c) eine Neigung um mehr als 20° in Bezug auf die Richtung des Stabes (3) aufweist.

4. Rührbesen (1, 2) für ein Gerät zur Zubereitung von Nahrungsmitteln nach einem der Ansprüche 1 bis 3, **dadurch gekennzeichnet, dass** der untere Teil (4b) des Flügels (4) eine größere Breite als der obere Teil (4a) des Flügels aufweist.

5. Rührbesen (1, 2) für ein Gerät zur Zubereitung von Nahrungsmitteln nach einem der Ansprüche 1 bis 4, **dadurch gekennzeichnet, dass** der Bereich der Einschränkung der Breite im Wesentlichen auf einem Drittel der Höhe des Flügels (4, 5) ausgehend vom unteren Ende des Flügels (4, 5) angeordnet ist.

6. Elektrohaushaltsgerät zur Zubereitung von Nahrungsmitteln, **dadurch gekennzeichnet, dass** es zwei Rührbesen (1, 2) nach einem der Ansprüche 1 bis 5 umfasst, wobei die genannten Rührbesen (1, 2) um ihren Stab (3) in Drehung versetzt werden.

7. Elektrohaushaltsgerät zur Zubereitung von Nahrungsmitteln nach Anspruch 6, **dadurch gekennzeichnet, dass** das genannte Gerät einen Motor umfasst, der die genannten Rührbesen (1, 2) in Drehung versetzt.

## Claims

1. Beater (1, 2) for food preparation appliance, comprising a drive rod (3) supporting a first frame (4) and a second frame (5) of generally rectangular shape extending longitudinally to the rod (3) and arranged perpendicular to each other, the first and second frames (4, 5) comprising longitudinal edges composed of an upper part (4a, 5a) and a lower part (4b, 5b) substantially straight, or slightly curved, inclined at less than 20° to the rod (3), the frames (4, 5) exhibiting locally a inflection point (4c, 5c) at an area of restricted width connecting the upper (4a, 5a) and lower (4b, 5b) parts such that the upper (4a, 5a) and lower (4b, 5b) parts of the frame (4, 5) have different average widths, **characterised in that** the lower part (4b) of the first frame (4) is wider than the upper part (4a) of the first frame and **in that** the upper part (5a) of the second frame (5) is wider than the lower part (5b) of the second frame.

2. Beater (1, 2) for food preparation appliance according to claim 1, **characterised in that** said frame (4, 5) is symmetrical with respect to said rod (3).

3. Beater (1, 2) for food preparation appliance according to claim 1 or 2, **characterised in that** the frame (4, 5) comprises, at the inflection point (4c, 5c), an inclination of more than 20° to the direction of the rod (3).

4. Beater (1, 2) for food preparation appliance according to any of claims 1 to 3, **characterised in that** the lower part (4b) of the frame (4) is wider than the upper part (4a) of the frame.

5. Beater (1, 2) for food preparation appliance according to any of claims 1 to 4, **characterised in that** the area of restricted width is arranged substantially at one third of the height of the frame (4, 5) starting from the lower end of the frame (4, 5).

6. Food preparation household electrical appliance, **characterised in that** it comprises two beaters (1, 2) according to one of claims 1 to 5, said beaters (1, 2) being driven in rotation around their rods (3).

7. Food preparation household electrical appliance according to claim 6, **characterised in that** said appliance comprises a motor for driving in rotation said beaters (1, 2).
